# EUROPEAN PATENT APPLICATION

(11) **EP 4 843 769 A1**
(43) Date of publication of application: **25.11.2026**
(21) Application number: 26460013.1
(22) Date of filing: 17.05.2026
(51) Int. Cl.: B32B 1/08, B32B 1/00, B32B 5/02, B32B 5/26, B32B 15/02, B32B 15/08, B32B 15/14, B32B 15/18, B32B 15/20, B32B 27/12, B32B 27/32, F16L 11/02, F16L 55/17

(54) **MULTI-LAYER ANTISTATIC SLEEVE OR PIPE MADE OF COMPOSITES FOR CIPP RENOVATION**

(30) Priority: 18.05.2025 PL 45207225
(71) Applicant: Instbud spolka z ograniczona odpowiedzialnoscia, 32-420 Gdow (PL)
(72) Inventor: Boguta, Szymon, 32-420 Gdów (PL); Boguta, Piotr, 32-420 Gdów (PL); Boguta, Marcin, 32-420 Gdów (PL); Piotrowicz, Barbara, 32-420 Gdów (PL)

(57) **Abstract**

The subject of the invention is the multilayer antistatic sleeve or pipe made from composites for CIPP (Cured-In-Place Pipe) rehabilitation.

The multilayer antistatic sleeve or pipe made from composites for CIPP (Cured-In-Place Pipe) rehabilitation **is characterized in that** in the multilayer wall **(22)** in the end zone **(K)** has a borehole filled with the cured mass **(12)** conducting electrical charges by which the stud **(14)** with the connector **(7)** above surface **(A)** is fastened, has external clamping ring **(8)** with the connector **(7a)** clamped onto the surface **(A),** and /or as conducting means, has over the length the layer **(P)** with thin layer **(1)** made from carbon, graphite or metal fibres with good electrical conductivity, in the form of the longitudinal ribbons or the sparse mesh with such ribbons joined by synchronous stitching, with applied and joined by quilting, the man-made and/or organic fibres portion **(5)** thereon.
Preferably, among middle layers **(N1, N2, N3)** has the mesh **(6a),** ribbons **(6),** cords **(6b),** fabric **(6c)** made from the copper-steel alloy. Preferably, among the middle layers **(Ni, N2, N3)** has the mesh **(6a),** ribbons **(6),** cords **(6b),** fabric **(6c)** or mat **(6d)** made from carbon, graphene fibres and/or carbon nanotubes. Preferably, the ribbons **(6)** have arranged longitudinally relative to central axis, preferably at the distance **(a)** 5 cm from each other. Preferably, the stud **(14)** or clamping ring **(8)** are connected to at least one strip **(9)** conducting electrical charges exited interior tangentially to the edges of the overlapping layers, onto the surface **(A).** Preferably, the layered conducting means **(P1)** are covered with the longitudinal stripes **(45)** of electro-conductive epoxy resin or electro-conductive paint.

## Description

The subject of the invention is the multilayer antistatic sleeve or pipe made from composites for CIPP (Cured-In-Place Pipe) rehabilitation.

In many fields of life, interest and demand for environmentally friendly ("green") products and programs for the removal of the hazardous materials - in particular, from residential and workplace areas, are increasing. The demand for "green" products that replace the petrochemical plastics and hazardous polymers results from the ecological awareness and need to improve healthy living conditions. The biologically derived materials are perceived as an ideal solution on architecture, institutional, commercial, and even residential markets. It is important that materials and products in these environments were not harmful to general human health and provide clean environment free from toxic chemicals.

In the pipelines running beneath overhead power lines or electric supply lines, such as the supply wires for trams or railways, the electric charges are generated that flow along the walls of the pipeline. The lack of the controlled dissipation of these electric charges outside the pipeline can cause hazardous events, for example, the explosion of gas leaking from a nearby gas installation.

In US8652617B2 patent description, biolaminate-composite assembly solution is disclosed, including the layer of the polylactic acid and natural wax laminate, and associated methods for manufacturing thereof as well. The biolaminate composite assemblies may contain one or more biolaminate layers, and at least one biolaminate layer may contain polylactic acid. In one embodiment, the biolaminate composite assembly containing one or more layers of biolaminate is provided, wherein the biolaminate composite assembly can be formed three-dimensionally on the rigid, non-plastic substrate. At least one biolaminate layer contains polylactic acid and natural wax. In case of the biolaminates, the layers containing various natural minerals, such as the silica (natural quartz), alumina, calcium carbonate, and other minerals, may be used for production of flooring goods to provide higher degree of wear resistance and hardness.

These wear-resistant materials may be formed as the medium-size particles which can be perceived visually as decorative and functional particles. Such a fine-grained material becomes transparent or semi-transparent in a biopolymer matrix or, in a nano-grained form, within the biolaminate layer.

In EP3400331A1 patent description the issue of eliminating the toxicity of the epoxy resins through the use of an aqueous dispersion was undertaken: (a) a base resin containing at least one C2-C3 polyolefin double bond with the melting point of at least 110°C; and (b) a dispersing agent containing at least one of a polymer containing ethylene and a carboxylic acid, a modifying polymer containing at least one maleate, C2-C3 polyolefin wax, or combinations thereof; wherein the elastic impregnated article has the flexural modulus of less than 15,000 psi.

In FR2520021A1 patent description, composite linings for the new or damaged pipes, including resin-impregnated nonwoven fabrics and strong woven fabric layers are disclosed. The elastic foil applied on the internal surface may be made from the natural or butyl rubber, polyethylene, or elastic PVC. The nonwoven layers may be composed of similar or different materials and/or thicknesses.

The reinforcement can be made from the woven fabric or mesh, in particular, from glass fibres, preferably arranged so that the warp and weft fibres were aligned with the axis and the radii of the pipe, respectively.

From GB2541285A patent description, a structural lining for reinforcing existing underground water channels is known in which the possibility of using natural plant fibres is disclosed. The curing resin may be a thermosetting resin, such as an epoxy resin, unsaturated polyester resin, vinyl ester-based resin, or a urethane-based resin, or the thermoplastic resin, such as the polyolefin, polyethylene, polyethylene terephthalate (PET), or the resin for technical application. The fibre yarn can be made from the polyester fibres, glass fibres, carbon fibres, aramid fibres, natural fibres such as cellulose fibres, such as flax or hemp fibres, oriented polyethylene fibres, polyamide fibres or polypropylene fibres.

In **CN207584195U** utility model description, for the dissipation of the electrostatic charges from pipes, the following solution was disclosed: a discharge pipe with a solid wall provided with an antistatic layer consists of a pipe body, wherein: the inner wall of the pipe body is provided with a metal wire mesh layer. The inner wall of the pipe body is provided with the first antistatic layer, and the outer body wall of the pipe body is provided with the second antistatic layer and the pipe body is equipped with plurality of the conductive strips. A conductive tape penetrates through the second antistatic layer, the pipe body, the wire mesh layer, and the first antistatic layer, and the conductive tape, the second antistatic layer, and the wire mesh layer are integrally formed with the pipe body. Preferably, the metal wire mesh layer, the conductive tape, and the second antistatic layer are made from the copper-aluminium alloy. An end of the conductive strip is provided with a protrusion having a triangular cross-section, while the first antistatic layer is the conductive paint

The antistatic resin composition is known from WO2016158224A1 patent description, used for receptacles and pipes for organic solvents in which the solution of the antistatic resin with following composition found application, comprising:
3-25 parts by mass of at least one polymer compound per 100 parts by mass of the thermoplastic resin, wherein the polymeric compound has the structure in which, diol, aliphatic dicarboxylic acid, aromatic dicarboxylic acid, compound having at least one group presented by general formula (-CH₂-CH₂-O-) and hydroxyl groups at both ends thereof, and epoxy compound having two or more epoxy groups, are linked together by ester bonds.

From EP4397690A1 patent description, the polyester-based plasticizer for molding the products with excellent resistance to oil extraction, which can be produced from biomass resources, and vinyl chloride-based resin composition containing the polyester-based plasticizer as well is known. The polyester-based plasticizer is obtained from a di-basic acid component A, glycol component B, hydroxy acid component C, and final component D, wherein component A is one or greater number of the components selected from the group including sebacic acid, azelaic acid and succinic acid; component B is one or the greater number of the components selected from the group including 1,2-propylene glycol, 1,3-propylene glycol, 1,3-butanediol, and 1,4-butanediol; component C is 12-hydroxystearic acid; and the final component D is one or the greater number of the components selected from the group including monocarboxylic fatty acid having 8 to 12 carbon atoms and a linear monohydroxy alcohol having 6 to 10 carbon atoms.

In CN114773529A patent description a resin system for light-curing of UV-CIPP pipe rehabilitation, prepared from 50 to 60 parts of unsaturated m-xylene-neopentyl glycol resin monomer, 40 to 45 parts of styrene monomer, 3 to 10 parts of acrylic acid ester, 0.5 to 3.5 parts of a photo-initiator system, 0.5 to 2.4 parts of a thermal initiator system, and 0.1 to 0.5 parts of an anti-foaming agent through polymerization is disclosed.

Various polymerization initiators suitable for use in CIPP technology are known, such as:
- the photo-initiators described by the chemical formulas available on sigmaaldrich.com under CAS numbers: 162881-26-7, 145052-34-2, 24650-42-8, 000947-19-3, 007473-98-5, 119313-12-1, 71868-10-5; 015206-55-0; 474510-57-1; 106797-53-9; 6652-28-4; wherein use of the several photo-initiator mixture is also possible;
- azo initiators described by the chemical formulas available on sigmaaldrich.com under CAS No.: 2094-98-6, 13472-08-7;
- peroxides: tert-Butyl Peroxy Benzoate, CAS No. 614-45-9, Di(4-tert-butylcyclohexyl) peroxydicarbonate, CAS No. 15520-11-3, mixture of the methyl-ethyl-ketone peroxide in dimethyl phthalate, cyclohexanone peroxides, acetylacetone peroxide (2,4-pentanedione peroxide).

From Bettermann's product offer, the electro-conductive mass for grounding (symbol OEC 25 5009200) and the various graphite compounds are also known.

The fibre acetylation process proposed in EP0213252 (to make them "acetylated") used for wooden fibre treatment, and this treatment improves the dimensional stability and biological resistance (to decomposition) of the lignocellulosic material.

The basic acetylation process relies on using the acetic anhydride to change fundamental chemistry of the cell wall polymers. In particular, with regard to the cellulose and hemicellulose components, for example, the highly specific biological enzymatic reactions cannot occur because of the chemical configuration and molecular conformation of the substrate have been changed.

The acetylation of the jute fibres was also studied (Mona Anderssen and AM Tillman, Journal of Applied Polymer Sciences, vol. 37, 3437, 1989).

From WO9719979A1 patent description, the lignocellulosic materials, in particular, the natural fibres, such as jute, which are advantageously used as dispersed in the curable synthetic resin in sheet structures are known.

The acetylated fibres are arranged as a part of the composite in the form of the elastic sheet material, the second part of which is viscous mass of type containing at least the curable resin component, such that the sheet material can be shaped, and the mass can be stiffened (when the thermoplastic resin is used) and cured (when the thermosetting resin is used) into the rigid form containing the acetylated fibres therein, and the obtained composite can be arranged as the elastic tubular structure that can be inflated to form the pipe. When comparing the conventional polyester fibre linings with linings made exclusively from the acetylated fibres, in particular made from jute fibres, it was found that the linings according to the invention are not only cheaper but even up to 50% stronger. The acetylated fibres have voids on their surface that are filled with resin, thereby bonds between the fibres and resin became stronger. The fibres can be pre-treated by rinsing with epoxy solvent and then dried to improve bonding between the fibres and the resin.

It is possible to use mixtures of the acetylated fibres and conventional fibres. The fibres may be in the form of the yarns that extend circumferentially over the tubular structure, and in such case, the yarns may be pre-impregnated by the resin that is the same as or consistent with the resin used for the tubular structure, so that they bond effectively with it. The yarn fibres may be acetylated before or after being formed into yarns. The acetylation of the fibres can be carried out by any suitable method, for example, as it was described in WO9801497A1, which relates to various methods for acetylating the lignocellulosic fibres such as jute, hemp, wooden fibres, sisal, tow and straw and the like.

In CN104420177A patent description, a method for bleaching jute fibres which selectively removes the lignin from the surface layer of the jute fibre is disclosed. The jute fibre surface layers are treated with sodium hypochlorite solution having pH of 6 to 6.5, and then subjected to sodium hypochlorite processing, having pH of 10.5-11 to extract chlorinated lignin and facilitate activation of the hydrogen peroxide during cooking with the hydrogen peroxide at pH of 10, 5-11.

A stabilized aqueous solution of 35% the hydrogen peroxide, also known as the perhydrol, is often used for bleaching. It is a dense, colourless liquid with strong oxidizing properties. The product is usually available in the concentrations of 35% or 50%. Although bleaching with the hydrogen peroxide is the environmentally friendly method, it brings poor effect on the lignin removal. Therefore, the hydrogen peroxide is often used in the bleaching process of the fibres containing smaller quantity of the lignin.

From JP2020020082 patent description, the method for the bleaching of the woven fabric containing the plant fibres is known in which the woven fabric is UV-irradiated during woven fabric treatment with ozonated water, wherein the material is the cotton woven fabric or linen woven fabric. The ozonated water treatment is carried out by continuously passing ozonated water through the woven fabric. The sodium hydroxymethanesulfinate is used as an agent for colour reversion reduction.

In CN103321033A patent description, the bleaching process for the bamboo fibre yarn which includes heating the dyeing tank to 90 °C, into which 100 parts by weight of yarn and 10-15 parts by weight of bleaching agent are added is disclosed.

In CN109056302A patent description, the low-temperature bleaching method for soya protein fibres is disclosed. The soya fibre is a type of the regenerated plant protein fibre produced from the residues and soya grit remaining after soya oil extraction. In terms of properties, the fibre is similar to the cotton, wool, hemp and silk fibre.

In WO2022015179A1 / EP4214047A1 application description in favor of the Applicant, the multilayer composite sleeve, in particular, for trenchless pipeline rehabilitation, has the decolourized plant fibres in an amount of 1% to 80% by weight of the laminate mass, preferably pre-reinforced with a thin layer of the synthetic material and/or pre-reinforced decolourized plant fibres by the parallel mineral or man-made fibres, from which it has the central layers having the structure of the woven fabrics, mats, braids, nonwovens, or felts.

In the central layers it has variable amount of 0 - 100% by volume of decolourized fibres in relation to the fibre content, preferably the polyacrylonitrile fibres, and most preferably the mixture with 10-90% of the mineral fibres. In the successive central layers, it has the percentage amount of the decolourized fibres increasing from the central layer with the smallest circumference to the central layer with the largest circumference, most preferably containing the basalt fibres. In the neighbouring central layers, it has different structure of decolourized fibres, preferably combined with other fibres. The decolourized fibres are obtained from the preparatory chemical fibre bleaching treatment.

The acetylation or bleaching processes of the plant fibres discussed above increase the light transmissivity of the layers formed from such fibres. Due to which, the polymerization process of the resins in the composite outer layers of the liner, which are farther from the radiation sources of the equipment inside is accelerated, and simultaneously it reduces the energy consumption of the entire CIPP process, associated with maintaining the inflation pressure of the sleeve until sleeve is completely cured.

The objective of the invention is to produce the "environmentally friendly" sleeve with the layered structure that meets the requirements of the transverse pressure strength on the cured sleeve within the repaired pipeline, together with the simultaneous dissipating of the electrical charges appearing in the pipeline during its operation, in particular, those resulting from the fluid friction against the pipeline walls and from the external electromagnetic fields.

In the design solution of the multilayer antistatic sleeve or pipe made from composite materials for CIPP rehabilitation, which has an internal thin layer and an external protective shield, the midlle layers are made from the fibres selected among mineral, organic, synthetic or inorganic fibres which said layers take form of the woven, quilted, felted, combed, directional fibres, portions of the fibres applied irregularly onto the preceding ones, layers stitched together or shifted with the longitudinal edges overlapping neighbouring layers and soaked with the curable resins with the polymerization initiators, wherein:
- as the internal foil layer it has elastic synthetic foils with the visible light transmittance (VLT) of above 60%: PE, HDPE, MDPE, PA/PE, integrated foils, or biodegradable foils,
- as the mineral ones, it has: the glass, basalt, and metal fibres,
- as the organic fibres, it has the plant fibres of flax, hemp, sisal, jute, cotton, kenaf, abaca, ramia, bamboo, coconut, sugarcane bagasse, castor bean, soya, silkworm fibres from Attacus atlas, or at least two of them, subjected to the treatment for bleaching or acetylation, alternatively pre-reinforced with the of the thin layer coating of the synthetic plastic or pre-reinforced with the parallel mineral or man-made fibres,
- as the man-made fibres, it has polypropylene fibres, PPTA (poly(p-phenylene terephthalamide)), polyester, aramid, polyethylene, terylene, viscose, polyamide, carbon fibres, or at least two of them,
- it has polymers susceptible to photoinitiation by UV- radiation,
- it has agents conducting electrical charges in the crystal or amorphous form,
**the essence** of the invention is that in the multilayer wall in the end zone it has a borehole filled with the cured mass conducting electrical charges, by means of which the stud with the connector above the surface is fastened; it has an external clamping ring with the connector clamped onto the surface and/or, as a conductive medium over its length, it has the layer P with the basic thin layer of the carbon, graphite, or metallic fibres made from metal with the good electrical conductivity, in the form of longitudinal strips or a sparse mesh with such strips connected by synchronous stitching, with portions of the man-made, mineral, and/or organic fibres laid on it and joined by quilting.

Preferably, it among middle layers has the mesh, strips, cords, or the woven fabric made from copper-steel alloy fibres.

Preferably, among the middle layers it has the mesh, ribbons, cords, woven fabric, or mat made from the carbon fibres, graphene, and/or carbon nanotubes.

Preferably, the ribbons are arranged longitudinally in relation to the central axis, preferably at a distance of 5 cm from each other. Preferably, the stud or clamping ring is connected to at least one conducting electrical charges tape exited the interior, tangentially to the edges of the overlapping layers, onto the surface.

Preferably, it has on the internal surface of layer I tangential to the internal foil layer, a wear-resistant thin layer in the form of a stainless steel mesh onto which the quartz sand and/or the nano-grained silica are applied, preferably within the mesh eyelets.

Preferably, conductive means are covered with the longitudinal strips of electro-conductive epoxy resin.

Unexpectedly, it turned out that using of the layer of the carbon fibres, alternatively mixed with the metal fibres, or applied onto one of the layers of the ribbons with a conductive material, enables to dissipate the electrical charges through the grounded connector. The beneficial effect of the solution according to the invention is utilizing the plant fibres for production of the sleeve and pipes for CIPP rehabilitation.

The flavonoids contained in the plants reduce the transmission of UV-radiation through the epidermis. The pigments protecting plants from the harmful UV-radiation include among others, carotenoids, within UV-A radiation, while cryptochromes and phototropins are photoreceptors for the blue radiation. Cryptochromes exhibit maximum absorption within 390-480 nm, with the fuzzy peak at 450 nm. The photosynthetic radiation (PAR) active within 400-700 nm is absorbed by the photosynthetic pigments, primarily αchlorophyll a and b, and carotenoids as well. The maximum absorption for chlorophylls falls within the violet-blue of 400-500 nm and orange-red range of 600-700 nm, with the absorption maxima at 420 and 668 nm for chlorophyll α and 440 and 648 nm for chlorophyll β; for carotenoids, within 400-500 nm, with the absorption maxima at approximately 420 nm, 450 nm, and 480 nm. (J. Pilarski et al., Adaptation of the plants to the spectral composition and intensity of radiation, Institute of Plant Physiology, Polish Academy of Sciences, Kraków, Proceedings of the Institute of Electrical Engineering, vol. 256, 2012). These substances hinder light penetration through the greater number of plant layers.

During chemical bleaching process of the plant fibres (and the possible subsequent acetylation), the amount of the light-absorbing chemicals - in particular, those within the UV spectrum-contained in the plant fibres is being reduced. Therefore, the increased penetration of UV-radiation is achieved through the greater number of the sleeve's middle layers containing the plant fibres.

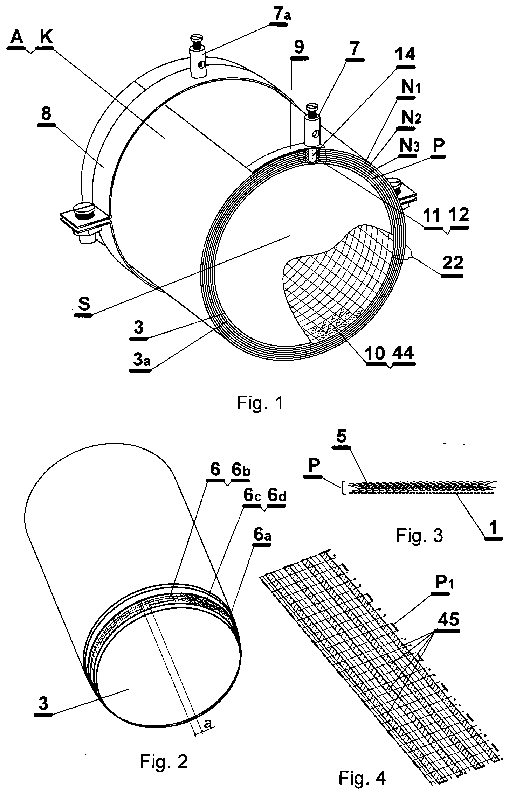

The solution was illustrated in the drawing, where fig. 1 shows the outer clamping ring with the connector clamped onto the surface of the end portion and the connector with the ending of the conductive ribbon led from between the layers, and the layer of the wear-resistant material as well, fig. 2 - shows the middle layer equipped with the mesh, ribbons, cords, woven fabric or mat, fig. 3 - shows the basic thin layer with strips joined by the synchronous stitching, with the portions of the fibres laid onto it and portion of fibres joined by quilting, while fig. 4 shows longitudinal strips of the electro-conductive epoxy resin, optionally the electro-conductive paint, applied with the rollers.

The solution according to the invention, on purpose of better explaining, is described below.

The multilayer antistatic sleeve or pipe made from composites for CIPP rehabilitation has the internal foil layer and the external protective shield, the middle layers made from among mineral, organic, man-made, or inorganic fibres, which said layers are in the form of woven, quilted, felted, combed, directional fibres, the portions of the fibres laid irregularly onto the preceding ones, the layers stitched together or shifted with the longitudinal edges overlapping the neighbouring layers, and soaked with the curable resins with the polymerization initiators, wherein:
- as the internal foil layer it has the elastic synthetic foils with the visible light transmittance (VLT) of above 60%: PE, HDPE, MDPE, PA/PE, the integrated or biodegradable foils,
- as the mineral fibres it has following ones: glass, basalt metal fibres.
- as the organic fibres it has he plant fibres of linen, hemp, sisal, jute, cotton, kena-fu, abaka, ramia, bamboo, coconut, sugarcane bagasse, castor bean, soya, silkworm fibres from Attacus atlas, or at least two of them, subjected to the treatment for the bleaching or acetylation, alternatively pre-reinforced with the synthetic resin thin layer coating of the synthetic plastic or pre-reinforced by the parallel mineral or man-made fibres,
- as the man-made fibres, it has the polypropylene fibres, PPTA (poli(*p*-fenylenotere-ftalamid)), polyester, aramid, polyethylene, terylene, viscose, polyesteramid, carbon fibres or at least two of them,
- it has the polymers susceptible to the photoinitiation by UV-radiation,
- it has agents conducting electrical charges in the crystal or amorphous form.

The sleeve or pipe in multilayer wall **22** in end zone **K** has the borehole **11** filled with the cured mass **12** conducting electrical charges by which the stud 14 with connector 7a is fastened above the surface A, it has external clamping ring 8 clamped onto the surface A and/or as conducting means over the length has the layer P with the basic thin layer of the carbon, graphite or metal fibres with the good electric conductivity, in the form of the longitudinal strips or the sparse mesh with such strips joined by synchronous stitching, with laid on it and joined together with portions **5** of the man-made fibres, mineral and/or organic fibres by quilting. Preferably, among the middle layers **N1, N2, N3,** it has the mesh **6a,** ribbon **6,** cords **6b,** woven fabric 6c made from the fibres of copper-steel alloy. Preferably, among the middle layers **N1, N2, N3,** it has the mesh **6a,** ribbons **6,** cords **6b,** woven fabric **6c** or mat **6d** made from the carbon, graphene and/or the carbon nanotubes. Preferably, the ribbons **6** are arranged longitudinally with respect to the central axis, preferably at distance of 5 cm from each other. Preferably, the stud **14** or the clamping ring **8** are connected to at least one copper strip 9 led out from the interior **S,** tangentially to the edges of the overlapping layers, onto the surface **A.** Preferably, it has on the internal surface of layer I **3a,** tangential to the internal foil layer **1,** the wear-resistant thin layer **10** in the form of the mesh **44** made from the stainless steel, onto which the quartz sand and/or nano-grained silica, preferably within eyelet of mesh **44,** is applied.

Preferably, the layered conductive means **P1** are coated with the longitudinal strips **45** of the electro- conductive epoxy resin, optionally with the electro-conductive paint.

The treatment methods including bleaching of the hemp fibres are described in the following descriptions:
CN101130885A, CN101130897A, CN103757964A, CN103757963A, CN108823714A, CN103882679A, CN105239352A, CN107401040A, CN104562217A, CN1004288B, CN1204317C, CN103696226A, CN101235549A, CN1844501A, CN109914124A, CN101177790A, KR101508905B1, CN100523320C and many others.

The treatment methods including bleaching of the linen fibres are described in the following descriptions: CN102409414A, UA41588U, CN108316014A, CN106087200A, CN101581034A, CN101100771A, CN107447260A, CN102605501A, CN109868644A, CN106835559A, CN105951235A and many others.

The disclosed solution was implemented for the experimental purposes.

The multilayer antistatic sleeve of composites for CIPP rehabilitation which has the internal foil layer and outer protective shield, the middle layers made from mixed fibres of mineral, organic, man-made, inorganic fibres, portions of fibres irregularly applied onto preceding layers, shifted with the longitudinal edges overlapping the neighbouring layers and soaked with the curable resins with the polymerization initiators was produced, wherein:
- as the internal foil layer, the elastic synthetic foils, including the biodegradable foils, with the visible light transmission (VLT) index above 60%, was used,
- as the mineral fibres, the following ones were used: the glass, basalt, and metal fibres,
- as the organic fibres, it has the plant fibres made from linen, pre-reinforced with a layer of synthetic coating and pre-reinforced by the parallel mineral and man-made fibres,
- as the man-made fibres, the polypropylene, polyethylene, and carbon fibres were utilized,
- in the matrix, the polymers susceptible to the photoinitiation by UV-radiation were utilized,
- electro-conductive means in amorphous form were applied.

The sleeve in the multilayer wall **22,** in the end zone **K,** has the borehole filled with the cured mass **12** conducting electrical charges, by which the stud 14 with the connector **7** is fastened above the surface A. The external clamping ring **8** with the connector **7a** clamped onto the surface A was used. As the conductive means over its length, it has the layer **P** with the basic thin layer **1** made from carbon fibres and metal fibres with the metal with the good electrical conductivity. They are in the form of the longitudinal ribbons and the sparse mesh with such ribbons joined by synchronous stitching, with portions **5** of the man-made, mineral, and organic fibres applied onto it and joined by quilting.

Preferably, among the middle layers **N1, N2, N3,** it has the mesh **6a,** ribbons **6,** cords **6b,** and the woven fabric **6c** made from fibres of the copper-steel alloy. Among the middle layers **N1, N2, N3,** it has the mesh 6a, while optionally ribbons **6,** cords 6b, woven fabric 6c, and mat **6d** made from carbon fibres, were utilized. The ribbons **6** are arranged longitudinally with respect to the central axis at a distance of a 5 cm from each other. The stud **14** and the clamping ring **8** are connected by the two copper ribbons **9** led out from the interior **S,** tangentially to the edges arranged as overlapping layers onto the surface **A,** at two ends of the sleeve at the assembly stage and the curing into the form of pipe.

On the internal surface of layer I **3a,** tangential to the internal foil layer **1,** the wear-resistant thin layer **10** was arranged in the form of the mesh **44** made from the stainless steel, onto which quartz sand, within the eyelets of the mesh 44, optionally nano-grained silica, is applied. On the layered conductive means **P1** longitudinal strips (45) made from the carbon fibres of the electro-conductive epoxy resin using the roller device and as alternating to the electro-conductive paint at stage of arranging the layers **N1, N2, N3** of the sleeve as overlapping layers were applied. The sleeve was then soaked with the mixture of the curable resins with the polymerization initiators.

The plant fibres brought to the form of the decolourized fibres were obtained in the chemical acetylation and bleaching processes by methods known from the state of-the art literature.

The above presented sleeve embodiment is one of the many possible to implement using the various bleached plant fibres in combination with the mineral or man-made fibres previously used, along with the electro-conductive means, to achieve the antistatic effect of the pipe rehabilitated according to CIPP technology when installed.

## Claims

1. The multilayer antistatic sleeve or composite pipe for CIPP rehabilitation, has the internal foil layer and external protective shield, the middle layers made from the fibres among mineral, organic, man-made, inorganic which said layers are in the form of woven, quilted, felted, combed, directional fibres, portions of the fibres applied irregularly on the preceding ones, the stitched layers or layers shifted with the longitudinal edges overlapping the neighbouring layers and soaked with the curable resins with the polymerization initiators, wherein:
- as the internal foil layer it has the elastic synthetic foils with the visible light transmission (VLT) index above 60%: PE, HDPE, MDPE, PA/PE, the integrated or biodegradable foils,
- as the mineral fibres it has: the glass, basalt, metal fibres,
- as the organic fibres it has the plant fibres of flax, hemp, sisal, jute, cotton, kenaft, abaka, ramia, bamboo, coconut, sugar cane bagasse, castor bean, soya, silkworm fibre Attacus atlas, or at least two of them, subjected to the treatment to bleaching or acetylation, alternatively pre-reinforced with the thin layer of the synthetic plastic coating or pre-reinforced by the parallel mineral or man-made fibres,
- as the man-made fibres it has the polypropylene fibres, PPTA (poli(*p-*fenylenotere-ftalamide), polyester, aramid, polyethylene, terylene, viscose, polyesteroamid, carbon fibres or at least two of them,
- it has the polymers susceptible to the photoinitiation by UV-radiation,
- it has the means conducting electric charges in the crystal and amorphous form,
**characterized in that** in the multilayer wall (22) in the end zone (K) has a borehole **(11)** filled with the cured mass **(12)** conducting electrical charges by which the stud **(14)** with a connector **(7)** above the surface **(A)** is fastened, it has together with the connector **(7a)** external clamping ring **(8)** clamped onto the surface **(A)** and/or as conducting means over the length it has layer **(P)** with the basic thin layer **(1)** made from carbon, graphite or metal fibres from metal with the good electrical conductivity, in the form of the longitudinal ribbons or a sparse fine mesh with such ribbons joined by synchronous stitching with applied thereon and joined with portions **(5)** of the man-made, mineral and/or organic fibres by quilting.

2. The sleeve according to claim 1, **characterized in that** among the middle layers **(N1, N2, N3)** it has the mesh **(6a),** ribbons **(6),** cords **(6b),** fabric **(6c)** made from the copper--steel alloy.

3. The sleeve according to claim 5, **characterized in that** among the middle layers **(N1, N2, N3)** has the mesh **(6a),** ribbons **(6),** cords **(6b),** fabric **(6c)** or mat **(6d)** made from the carbon, graphene fibres and/or carbon nanotubes.

4. The sleeve according to claim 2 or 3, **characterized in that** the ribbons **(6)** have arranged longitudinally relative to the central axis, preferably at a distance **(a)** 5 cm of each other.

5. The sleeve according to claim 1, **characterized in that** the stud **(14)** or the clamping ring **(8)** are connected to at least one ribbon **(9)** conducting electrical charges exited interior (S), tangentially to the edges of the layers arranged as overlapping, onto the surface **(A).**

6. The sleeve according to claim 1, **characterized in that** onto the internal surface of the layer I **(3a)** tangential to the internal foil layer **(1)** it has the thin wear-resistant layer (10) in the form of the fine mesh (44) made from stainless steel onto which the quartz sand and/or nano-grained silica, preferably into the eyelets of the mesh (44) are applied.

7. The sleeve according to claim 1, **characterized in that** the conducting layered means **(P1)** are covered with the longitudinal stripes (45) of the electro-conductive epoxy resin or electro-conductive paint.
